Europäisches Patentamt

European Patent Office

Office européen des brevets

(11) Publication number: **0 086 177**

**A1**

(12) # EUROPEAN PATENT APPLICATION

(21) Application number: **83830020.0**

(22) Date of filing: **01.02.83**

(51) Int. Cl.³: **G 11 B 23/02**

(30) Priority: **05.02.82 IT 2891682 U**

(43) Date of publication of application:
**17.08.83 Bulletin 83/33**

(84) Designated Contracting States:
**AT BE CH DE FR GB LI NL SE**

(71) Applicant: **Pongolini, Roberto**
**Via Martiri della Libertà, 33**
**I-43036 Fidenza (Parma)(IT)**

(71) Applicant: **Gorrieri, Bruno**
**Via Gobetti, 81**
**I-43036 Fidenza (Parma)(IT)**

(72) Inventor: **Pongolini, Roberto**
**Via Martiri della Libertà, 33**
**I-43036 Fidenza (Parma)(IT)**

(72) Inventor: **Gorrieri, Bruno**
**Via Gobetti, 81**
**I-43036 Fidenza (Parma)(IT)**

(74) Representative: **Cicogna, Franco**
**Ufficio Internazionale Brevetti Dott.Prof. Franco Cicogna**
**Via Visconti di Modrone, 14/A**
**I-20122 - Milano(IT)**

(54) **Modular case for videocassettes and the like.**

(57) The case comprises a box-like body (1) having an open side and coupling male and female elements (4, 5) on the main surface thereof for coupling adjoining box-like bodies (1).

A closure element (6) is provided effective to be coupled to the box-like body and provided with a bracket portion (7) provided with side edges (8) joining with corresponding edges (10) as formed on the inner face of the back portion (9) of the box-like body (1) and ending at the top with enlarged ears (10a), the bracket portion, side edges (8), corresponding edges (10) and ears (10a) being effective to be engaged with peripherical portions of a videocassette and the like to be supported thereby.

COMPLETE DOCUMENT

./...

EP 0 086 177 A1

Croydon Printing Company Ltd

Fig. 1

The present invention relates to a modular case for videocassettes and the like.

As it is known, there are presently available on the market several types of cases, or containers, for videocassettes and the like which, in the most simple embodiment, consist of substantially box-like structures.

That form of packaging usually presents the drawback that it does not afford the possibility of orderly and firmly arranging the videocassettes, thereby the latter may be hardly selected for use.

Accordingly, the task of the present invention is to overcome the thereinabove mentioned drawback by providing a modular case specifically designed for videocassettes, which is effective to orderly house the cassettes, while affording the possibility of easily and quickly selecting the cassette to be used without disturbing the ordered arrangement of the remaining videocassettes.

Within that task, it is a primary object of the present invention to provide such a modular case the structure thereof is a very simple one and which may be easily used.

-3-

Another object of the present invention is to provide such a modular case which is effective to safely protect the contained video-cassettes, and prevent said cassettes from being displaced.

According to one aspect of the present invention, the thereinabove mentioned task and objects, as well as yet other objects which will become more apparent hereinafter, are achieved by a modular case for videocassettes and the like, characterized in that it comprises a substantially flattened configuration box-like body, having an open side and coupling male and female elements on the greater surfaces whereof for coupling adjoining box-like bodies, a closure element effective to be coupled to said box-like body and having a back effective to be coupled to said open side and provided with a bracket portion perpendicularly extending from said back portion, said bracket portion being provided with side edges joining with corresponding edges as provided on the inner face of said back portion and ending at the top with enlarged ears, said bracket portion,

said side edges, said corresponding edges and said ears being effective to be engaged with peripherical portions of a videocassette and the like to be supported thereby.

Further characteristics and advantages will become more apparent hereinafter from the following detailed descrption of a modular case for videocassettes and the like, being illustrated, by way of an indicative but not limitative example, in the accompanying drawings, where:

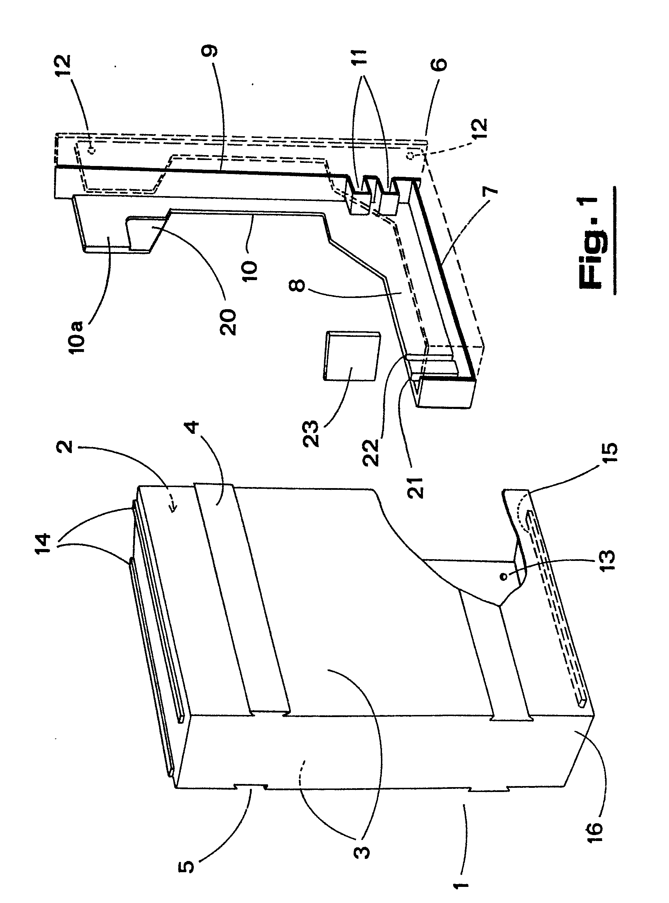

fig.1 is an exploded partially broken away view illustrating a modular case or container according to the present invention;

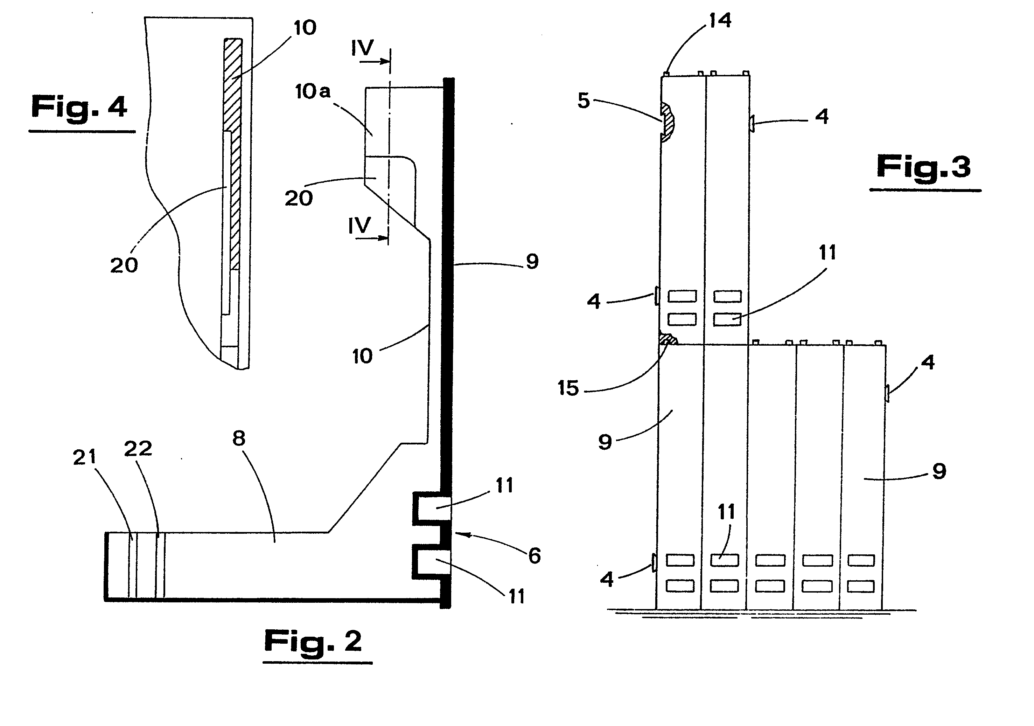

fig.2 is a middle cross-section view illustrating the closure element associated with the case according to the present invention;

fig.3 schematically illustrates an adjoining and piling up coupling of a plurality of modular cases; and

fig.4 is a cross-sectional view taken substantially along the line IV-IV of fig.2.

With reference to the mentioned figures, the modular case or container for videocassettes and the like, according to the present invention, comprises a box-like body, indicated overally by the reference number 1, which is preferably provided with a flattened configuration and is made from a plastics material.

Said box-like body is provided with an open greater side for accessing the case inside.

At the opposite greater sides thereof, indicated at 3, the box like body 1 is provided with male and female coupling elements, preferably consisting of dovetail lugs 4 and recesses 5, which are so arranged as to allow for adjoining box-like bodies to be firmly coupled to one another by a fixed joint type of coupling.

According to a preferred, though not binding, embodiment, each side is provided with a male coupling element and a female coupling element, which are parallely arranged at a predetermined distance from one another.

A closure element 6 may be movably coupled to the box-like body 1, which closure element is provided with a back portion 9 effective to be

-6-

coupled at said open side 2.

From said back portion a bracket portion 7 extends at the bottom, which bracket portion 7 is perpendicularly arranged to said back portion and is effective to be introduced inside the case.

The bracket portion 7 is laterally contained by side edges 8 which are joined to corresponding side edge or rims 10 longitudinally formed on the inner face of the back portion 9.

The side edges 10 are terminated at the top by enlarged ears 10a which are advantageously converging with respect to one another.

The bracket portion 7, the side edges 8, the corresponding edges or rims 10 as well as said enlarged ears 10a are effective to engage with at least a peripherical portion of a videocassette for introducing the latter inside the box-like body 1; it should also be noted that the size of the portion of the closure element 6 which is introduced into the case are so designed as to obtain a comparatively precise fixed joint type of coupling.

In order to favour the gripping of said back portion 9, on a portion of the latter there are provided spaced recesses 11 which are practically effective to define a gripping element.

In order to allow for a stable coupling to be obtained between the closure or cover element 6 and said box-like body, on the side zones of the rims 10 there are formed semispherical portions 12 effective to snap engage with corresponding notches 13 as formed on the inner surface of said box-like body 1.

The lugs 12 may exit the notches 13 due to the elastic deformability of the materials forming both said box-like body 1 and the closure element 6.

The box-like bodies 1, in addition to being couplable to one another as it has been illustrated thereinabove, may also be mutually stacked, thereby, at the top face adjacent to said open face 2 there are provided centering lugs 14 longitudinally extending on said face and effective to be coupled to corresponding centering recesses formed at the lower face of said box-like body 1.

In order to house on the closure element 6 videocassettes of different sizes, the side ears 10a which, as it has been said, are converging, are
provided with undercuts 20 effective to receive
the upper corner of a videocassette, while preventing
said videocassette from undesirably moving in the
inside of the element itself.

In order to facilitate the engaging
of videocassettes of different size, at the side
edges 8 of the mentioned bracket portion 7 there are
provided two recess pairs 21 and 22 which are located
adjoining   one another and are effective to
receive, by a fixed joint type of coupling, a movable
wall 23 perpendicularly extending with respect both
to the bracket portion 7 and the side edges 8.

The small wall 23 is inserted either
into one or the other recess pairs 21 or 22
depending on the contingent size of the videocassette.

From the above disclosure it should
be noted that the invention fully achieves the
intended objects; more specifically the fact is to
be pointed out that a modular case is provided which
affords the possibility of orderly preserving the
videocassettes, by adjoining and coupling to one another the several box-like bodies, while affording the
possibility of easily selecting the videocassettes
to be used, without disturbing in any ways the proper
arrangement of the remaining videocassettes.

In practicing the invention, the used
materials, as well the size and contingent shapes
may be any, according to the needs.

## C L A I M S

1- A modular case for videocassettes and the like, characterized in that it comprises a substantially flattened configuration box-like body (1), having an open side an coupling male and female elements (4,5) on the greater surfaces whereof for coupling adjoining box-like bodies (1),a closure element (6) effective to be coupled to said box-like body and having a back portion (9) effective to be coupled to said open side and provided with a bracket portion (7) perpendicularly extending from said back portion (9),said bracket portion (7) being provided with side edges (8) joining with corresponding edges (10) as provided on the inner face of said back portion (9) and ending at the top with enlarged ears (10a),said bracket portion (7),said side edges (8),said corresponding edges (10) and said ears (10a) being effective to be engaged with peripherical portions of a videocassette and the like to be supported thereby.

2- A modular case,according to the preceding claim, characterized in that said male and female coupling elements(4,5) are respectively formed by dovetail lugs and recesses.

3- A modular case, according to the preceding claims, characterized in that on each said greater face there are respectively provided a male coupling element (4) and a female coupling element (5).

4- A case, according to one or more of the preceding claims, characterized in that on said closure element (6) there is provided at least a gripping element consisting of a pair of closely spaced recesses (11) formed on said back portion (9).

5- A case, according to one or more of the preceding claims, characterized in that said enlarged ears (10a) are mutually converging and define, on the facing surfaces thereof, a undercut (20) provided for engaging with the corner of a videocassette.

6- A modular case, according to one or more of the preceding claims, characterized in that it is provided, on said edges of said bracket portion (7), with at least a pair of recesses (21,22) for coupling to a movable small wall(23), in order to allow for different size videocassettes to be fitted to said closure element (6).

7- A modular case, according to one or more of
the preceding claims, characterized in that it
comprises, on the side walls of said closure
element(6), lugs (12) effective to be snap engaged
with corresponding notches (13) formed on the
inner surface of said box-like body.

8- A modular case, according to one or more of the
preceding claims, characterized in that it comprises,
on the top face of said box-like body (1), centering
lugs (14) effective to be engaged with recesses
(15) correspondingly formed on the lower face of
a box-like body (1) stacked thereon.

9- A modular case or container for videocassettes,
according to the preceding claims, and substantially
as disclosed and illustrated for the intended
objects.

**Fig. 1**

**Fig. 4**

10

20

10a

20

IV

IV

10

9

8

21 22

11

6

11

**Fig. 2**

**Fig.3**

14

5

4

11

4

15

9

4

9

11

4

2/2

0086177

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 317 184 (IMHAUS et al.) * Page 3, lines 26-33; figures 1-2 * | 1-3,8 | G 11 B 23/02 |
| Y | US-A-4 054 344 (FUJIMOTO et al.) * Column 4, lines 20-32; figures 1-2 * | 1-3 | |
| A | US-A-4 253 568 (LONG et al.) * Column 3, lines 9-14; figure 1 * | 1,7 | |
| A | US-A-4 111 502 (KESSLER) * Column 2, lines 4-9; figure 1 * | 1,4 | |
| A | US-A-4 084 865 (JOYCE) * Column 5, lines 65-68; figure 2 * | 6 | TECHNICAL FIELDS SEARCHED (Int. Cl. ³) G 11 B 23/02 |

The present search report has been drawn up for all claims

| Place of search THE HAGUE | Date of completion of the search 17-05-1983 | Examiner S. WIBERGH |
|---|---|---|